# EUROPÄISCHE PATENTSCHRIFT

(11) **EP 0 524 415 B1**
(45) Veröffentlichungstag und Bekanntmachung des Hinweises auf die Patenterteilung: **10.01.1996**
(21) Anmeldenummer: 92109878.6
(22) Anmeldetag: 12.06.1992
(51) Int. Cl.: B08B 5/04

(54) **Vorrichtung zum Entfernen von Staubpartikeln auf Materialbahnen**
Device to remove dust particles from webs of material
Dispositif d'écartement des particules de poussière d'une bande de matériel

(30) Priorität: 25.07.1991 DE 4124672
(43) Veröffentlichungstag der Anmeldung: 27.01.1993
(73) Patentinhaber: Ahlbrandt, Andreas, Dipl.-Ing., D-36341 Lauterbach/Hess. 1 (DE)
(72) Erfinder: Ahlbrandt, Andreas, Dipl.-Ing., D-36341 Lauterbach/Hess. 1 (DE)
(74) Vertreter: Schlagwein, Udo, Dipl.-Ing.

(56) Entgegenhaltungen:
- DE-A- 1 786 277
- FR-A- 2 179 707
- US-A- 4 145 386
- US-A- 4 940 894
- PATENT ABSTRACTS OF JAPAN vol. 9, no. 103 (M-377) 8 Mai 1985; & JP-A-59 227 455 (MITSUBISHI) 20 Dezember 1984

## Beschreibung

Die Erfindung betrifft eine Vorrichtung zum Entfernen von Staubpartikeln auf Materialbahnen großer Dicke, insbesondere Wellpappe, welche zum Lösen der Staubpartikel von der Oberfläche der Materialbahn an entgegengesetzten Seiten der Materialbahn angeordnete, über die Breite der Materialbahn verlaufende, stabförmige Sprühelektroden aufweist und bei der zum Abtransport der gelösten Staubpartikel eine Absaugung vorgesehen ist.

Materialbahnen müssen vor einer Bearbeitung oftmals von anhaftenden Staubpartikeln befreit werden. Das ist beispielsweise bei zum Bedrucken bestimmter Materialbahnen vor dem Druckvorgang der Fall. Auch vor einer Koronavorbehandlung ist es vorteilhaft, die zu behandelnden Materialbahnen zu reinigen, damit es nicht zu einer Verschmutzung der Sprühentladungsmaschine kommt.

Es sind bereits eine Reihe von Bahnreinigungsanlagen bekannt. Diese lassen sich unterteilen in berührungsfrei arbeitende Vorrichtungen und solche mit Bürstenunterstützung. Bei ersteren wird allein durch Blasen und Absaugen der Materialbahn eine Säuberung vorgenommen. Eine solche Reinigung ist jedoch oftmals nicht ausreichend. Vorrichtungen mit Bürstenunterstützung arbeiten mit rotierenden Bürsten oder stationären Bürstenleisten, welche die Staubpartikel von der Materialbahn mechanisch lösen, so daß sie anschließend abgesaugt werden können. Auf diese Weise läßt sich eine bessere Reinigung erzielen, jedoch kommt es leicht zu einer Beschädigung der Oberfläche der Materialbahn.

Bekannt ist es in der Praxis auch, Materialbahnen in Form von Folien mittels Ionisierstäben elektrisch zu entladen und dadurch zu neutralisieren, so daß keine Staub anziehenden, elektrischen Kräfte wirken. Eine Reinigung von Materialbahnen großer Dicke läßt sich durch solche Ionisierstäbe jedoch nicht erreichen.

Die FR-A-21 79 707 beschreibt bereits eine Vorrichtung zur Befreiung von Glasscheiben von Staubteilchen durch eine Koronabehandlung. Hierzu sind in der Vorrichtung zu beiden Seiten der zu behandelnden Glasscheiben blanke, mit einem Wechselstromgenerator verbundene Sprühelektroden angeordnet. Zusätzlich zu den Sprühelektroden sind in der Vorrichtung innerhalb einer Absaughaube quer über die Glasscheiben verlaufende Blasrohre angeordnet, welche Luft auf die Glasscheiben blasen.

Der Erfindung liegt das Problem zugrunde, eine Vorrichtung der eingangs genannten Art zum Entfernen von Staubpartikeln auf Materialbahnen großer Dicke so zu gestalten, daß sie möglichst wirkungsvoll arbeitet, ohne daß die Gefahr einer Beschädigung der Oberfläche der Materialbahn besteht.

Dieses Problem wird erfindungsgemäß dadurch gelöst, daß die Sprühelektroden mit einem Dielektrikum überzogen und an entgegengesetztem Potential angelegt sind und daß die Absaugung zur Erzeugung eines Luftstromes auf jeder Seite der Materialbahn zwischen der Materialbahn und der aktiven, sprühenden Seite der jeweiligen Sprühelektrode ausgebildet ist.

Mit einer solchen Vorrichtung lassen sich infolge der Koronaentladungen auf der Materialbahn haftende Staubpartikel so stark gleichsinnig mit der Materialbahn aufladen, daß eine abstoßende Wirkung zwischen den Staubpartikeln und der Materialbahn entsteht und die Partikel deshalb leicht abgesaugt werden können. Selbst relativ grobe Partikel auf der Oberfläche der Materialbahn können dank der Erfindung entfernt werden. Da die Sprühelektroden mit einem hitzebeständigen Dielektrikum, vorzugsweise Quarz oder Keramik, überzogen sind und infolge der erfindungsgemäßen Luftführung, lassen sich nicht nur elektrische Ladungen neutralisieren, vielmehr werden die Oberfläche und Partikeln gleichnamig aufgeladen, so daß eine abstoßende Kraft entsteht. Es bedarf deshalb keiner starken Luftströmung, um selbst große Partikel wegzutransportieren. Gleichzeitig entsteht ein Effekt des "Abflämmens" innerhalb der Coronaentladung, wobei aus der Oberfläche herausragende Faserenden an den Spitzen abgebrannt werden, was sich bei nachfolgenden Glanzschichten besonders günstig auswirkt. Da die Materialbahn die Sprühelektroden nicht berührt, was durch die Bildung von Luftpolstern infolge der Luftführung begünstigt wird, kann es durch das Arbeiten der Vorrichtung nicht zu einer Beschädigung der Oberfläche der Materialbahn kommen. Die erfindungsgemäße Vorrichtung arbeitet vergleichbar wirkungsvoll wie eine Vorrichtung mit rotierenden Bürsten, vermeidet jedoch die Gefahr einer Oberflächenbeschädigung. Durch die Anordnung von zwei Sprühelektroden wird erreicht, daß die Materialbahn beim Durchfahren der Vorrichtung gleichzeitig auf beiden Seiten gereinigt wird.

Gleitende Reibung beim Transport der Materialbahn durch die erfindungsgemäße Vorrichtung und das dadurch entstehende Risiko eines Zerkratzens der Materialbahn kann dadurch verhindert werden, daß zur Abstützung der Materialbahn vor und hinter den Sprühelektroden jeweils eine Leitwalze drehbar angeordnet ist.

Die erfindungsgemäße Vorrichtung eignet sich insbesondere zur Reinigung von aus Recyclingmaterial hergestellter Wellpappe vor Druckvorgängen. Dank der Erfindung kann vermieden werden, daß Druckklischees und Farbauftragswalzen in kurzer Zeit durch die Klebekraft der Farben mit Schmutzpartikeln überzogen werden, so daß bei den Druckbildern keine sauberen Ränder entstehen. Durch die Erfindung werden deshalb häufige Stillstandszeiten beim Drucken und der Verlust von Farben infolge der notwendigen Reinigungsvorgänge vermieden.

Besonders einfach ist die Vorrichtung gestaltet, wenn die Sprühelektrode jeweils an der offenen Seite eines in etwa u-förmigen Profilteils angeordnet ist und die Luftzuführung durch Öffnungen in der Basisfläche des Profilteils erfolgt.

Besonders vorteilhaft ist es, wenn in jedem Profilteil zwei Sprühelektroden mit geringem Abstand nebeneinander angeordnet sind und zu beiden Seiten des Profilteils jeweils ein Luftabsaugkanal angeordnet und ein auf die Materialbahn auftreffender Teilluftstrom vor der Sprühelektrode unmittelbar in die Luftabsaugkanäle geführt ist. Hierdurch kann ein Teil des Staubes schon vor dem Passieren der Sprühelektrode entfernt werden, wodurch sich die Verschmutzungsgefahr der Sprühelektrode und nachgeordneter Teile der Vorrichtung erheblich vermindert. Wenn man den Saugstrom in die Luftabsaugkanäle zusätzlich unterstützen will, dann kann man in den Luftkanälen, aus welchen die Luft zuströmt, einen weiteren Ventilator anordnen, so daß die Luft mit Überdruck der Sprühelektroden zuströmt.

Bei relativ kleiner Leistung kann eine Elektrode, vorzugsweise am Eintritt der Vorrichtung, blindgeschaltet oder durch einen Isolierstab ersetzt werden. Lose auf dem Material aufliegende, nicht haftende Partikel werden dann von den Elektroden ferngehalten. Dadurch werden nachfolgende Elektroden durch diese nicht mehr verschmutzt, da immer mit einer Verklebung der Partikel infolge der Erwärmung der Elektroden, bedingt durch hohe elektrische Leistung, zu rechnen ist.

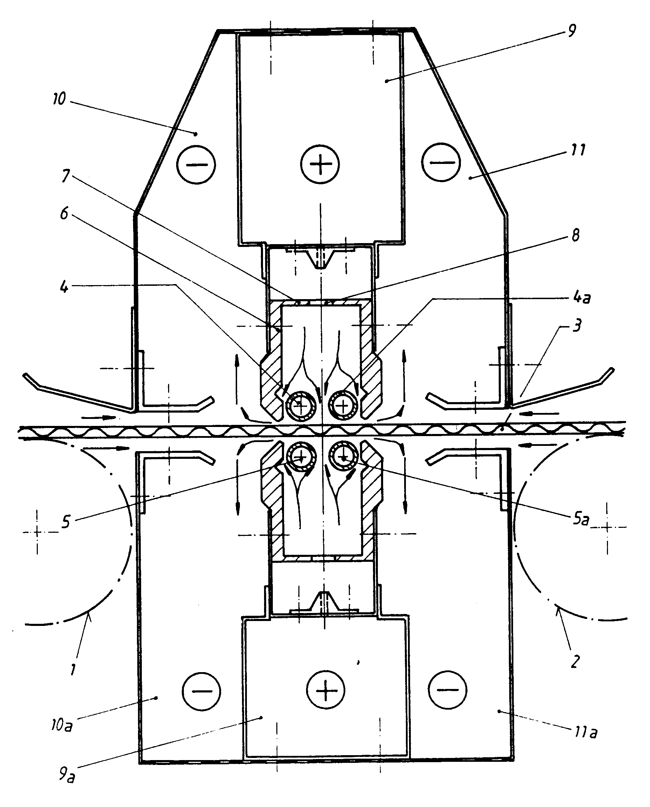

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben.

Die erfindungsgemäße Vorrichtung hat zwei drehbar gelagerte Leitwalzen 1, 2, auf denen eine Materialbahn 3 durch die Vorrichtung hindurch bewegbar ist. Bei diesem Beispiel soll es sich bei der Materialbahn 3 um zu bedruckende Wellpappe handeln. Im Inneren der Vorrichtung sind zu beiden Seiten der Materialbahn 3 mit geringem Abstand zu ihr und geringem gegenseitigen Abstand jeweils zwei Sprühelektroden 4, 4a; 5, 5a angeordnet, bei denen es sich um über die Breite der Materialbahn 3 reichende, mit einem Dielektrikum überzogene Stabelektroden handelt.

Die Sprühelektroden 4, 4a sind ebenso wie die Sprühelektroden 5, 5a in der offenen Seite eines u-förmigen Profilteiles 6 angeordnet. Dieses Profilteil 6 hat in seiner Basisfläche 7 Öffnungen 8, durch die Luft aus einem oberhalb des Profilteils 6 angeordneten Luftkanal 9 in das Innere des Profilteiles 6 strömen kann. Seitlich des Profilteiles 6 sind neben dem Luftkanal 9 Luftabsaugkanäle 10, 11 angeordnet. Mittels eines nicht dargestellten Gebläses wird Luft aus dem Luftkanal 9 angesaugt und strömt auf den durch Pfeile gekennzeichneten Wegen zwischen den Sprühelektroden 4, 4a und der oberen Seite der Materialbahn 3 in die Luftabsaugkanäle 10, 11.

Zu erkennen ist in der Zeichnung, daß die Luft nicht nur zwischen den Sprühelektroden 4, 4a bzw. 5, 5a und dann durch die sprühende Zone hindurch zur Seite in die Luftabsaugkanäle 10, 11 bzw. 10a, 11a, sondern auch außen an den Sprühelektroden 4, 4a; 5, 5a vorbei zu strömen vermag. Diese äußeren Teilluftströme gelangen in die Luftabsaugkanäle 10, 11 bzw. 10a, 11a, ohne dabei die aktive, sprühende Seite der Sprühelektroden 4, 4a; 5, 5a passieren zu müssen. Dadurch können an der Einlaufseite der Materialbahn 3 weniger fest haftende Staubteile bereits abgeführt werden, bevor der Reinigungsvorgang durch die Koronaentladungen erfolgt.

Auf der Unterseite der Materialbahn 3 ist die Vorrichtung identisch zur Oberseite gestaltet.

Zum Betrieb der Vorrichtung werden die Sprühelektroden 4, 5 mittels eines Mittelfrequenzgenerators mit elektrischer Energie versorgt, wobei die Sprühelektroden 4, 5 an unterschiedlichem Potential anliegen. Die für die Koronaerzeugung benötigte Generatorleistung liegt dabei wesentlich niedriger als der Energiebedarf bisher gebräuchlicher Reinigungsanlagen.

### Bezugszeichenliste

- 1: Leitwalze
- 2: Leitwalze
- 3: Materialbahn
- 4: Sprühelektrode
- 5: Sprühelektrode
- 6: Profilteil
- 7: Basisfläche
- 8: Öffnung
- 9: Luftkanal
- 10: Luftabsaugkanal
- 11: Luftabsaugkanal

## Patentansprüche

1. Vorrichtung zum Entfernen von Staubpartikeln auf Materialbahnen (3) großer Dicke, insbesondere Wellpappe, welche zum Lösen der Staubpartikel von der Oberfläche der Materialbahn (3) an entgegengesetzten Seiten der Materialbahn (3) angeordnete, über die Breite der Materialbahn (3) verlaufende, stabförmige Sprühelektroden (4, 5) aufweist und bei der zum Abtransport der gelösten Staubpartikel eine Absaugung vorgesehen ist, **dadurch gekennzeichnet**, daß die Sprühelektroden (4, 5) mit einem Dielektrikum überzogen und an entgegengesetztem Potential angelegt sind und daß die Absaugung zur Erzeugung eines Luftstromes auf jeder Seite der Materialbahn (3) zwischen der Materialbahn (3) und der aktiven, sprühenden Seite der jeweiligen Sprühelektrode (4, 5) ausgebildet ist.

2. Vorrichtung nach Anspruch 1, **dadurch gekennzeichnet**, daß zur Abstützung der Materialbahn (3) vor und hinter den Sprühelektroden (4, 5) jeweils eine Leitwalze (1, 2) drehbar angeordnet ist.

3. Vorrichtung nach Anspruch 2, **dadurch gekennzeichnet**, daß die Sprühelektrode (4, 5) jeweils an der offenen Seite eines in etwa u-förmigen Profilteils (6, 6a) angeordnet ist und die Luftzuführung durch Öffnungen (8) in der Basisfläche (7) des Profilteils (6, 6a) erfolgt.

4. Vorrichtung nach Anspruch 3, **dadurch gekennzeichnet**, daß in jedem Profilteil (6, 6a) zwei Sprühelektroden (4, 4a; 5, 5a) mit geringem Abstand nebeneinander angeordnet sind und zu beiden Seiten des Profilteils (6a) jeweils ein Luftabsaugkanal (10, 11) angeordnet und ein auf die Materialbahn (3) auftreffender Teilluftstrom vor der Sprühelektrode (5) unmittelbar in die Luftabsaugkanäle (10, 11) geführt ist.

## Claims

1. Device for removing dust particles from material webs (3) of great thickness, in particular corrugated cardboard, which has rod-shaped spray electrodes (4, 5) arranged on opposite sides of the material web (3) and extending over the width of the material web (3) for releasing the dust particles from the surface of the material web (3) and in which an aspirator is provided for carrying off the released dust particles, characterized in that the spray electrodes (4, 5) are covered with a dielectric and are connected to opposite potential and in that the aspirator is designed to generate an air stream on each side of the material web (3) between the material web (3) and the active spraying side of the respective spray electrode (4, 5).

2. Device according to Claim 1, characterized in that a respective guide roller (1, 2) is rotatably arranged in front of and behind the spray electrodes (4, 5) to support the material web (3).

3. Device according to Claim 2, characterized in that the spray electrode (4, 5) is arranged in each case on the open side of a substantially U-shaped profile part (6, 6a) and the air is supplied through orifices (8) in the base (7) of the profile part (6, 6a).

4. Device according to Claim 3, characterized in that two spray electrodes (4, 4a; 5, 5a) are arranged next to one another with slight spacing in each profile part (6, 6a) and a respective air aspiration duct (10, 11) is arranged on either side of the profile part (6a) and a partial air stream impinging on the material web (3) is guided in front of the spray electrode (5) directly into the air aspirating ducts (10, 11).

## Revendications

1. Dispositif pour l'élimination de particules de poussière sur des bandes de matériau (3) de grande épaisseur en particulier du carton ondulé, dispositif comportant pour enlever les particules de poussière de la surface supérieure d'une bande de matériau (3), deux électrodes d'émission (4,5) en forme de baguettes disposées de part et d'autre de la bande de matériau et sur toute sa largeur, et une aspiration pour le transport des particules de poussières éliminées, caractérisé en ce que les électrodes d'émission (4,5) sont recouvertes d'un diélectrique et raccordées à des potentiels inverses, et en ce que l'aspiration est conçue pour former un flux d'air de chaque côté de la bande de matériau (3), entre la bande de matériau (3) et le côté actif émetteur de chacune des électrodes d'émission (4,5).

2. Dispositif selon la revendication 1, caractérisé en ce que l'on prévoit un rouleau de guidage (1,2) rotatif à l'avant et à l'arrière des électrodes d'émission (4,5) pour soutenir la bande de matériau (3).

3. Dispositif selon la revendication 2, caractérisé en ce que les électrodes d'émission (4,5) sont chacune disposées sur le côté ouvert d'un profil (6,6a) à section sensiblement en forme de U et en ce que les arrivées d'air se font par des ouvertures (8) de la base des profils (6,6a).

4. Dispositif selon la revendication 3, caractérisé en ce que deux électrodes d'émission (4,4a ; 5,5a) sont disposées à faible distance l'une de l'autre dans chaque profil (6,6a), un canal d'aspiration (10,11) est disposé de chaque côté du profil (6a) et une partie du flux d'air incident sur la bande de matériau (3) est conduite directement dans les canaux d'aspiration (10,11).
